# EUROPEAN PATENT APPLICATION

(11) **EP 2 503 809 A1**
(43) Date of publication of application: **26.09.2012**
(21) Application number: 11305316.9
(22) Date of filing: 21.03.2011
(51) Int. Cl.: H04W 12/06, H04L 29/06, G07F 7/10, H04W 88/02

(54) **Method and device for authenticating at least two tokens**

(71) Applicant: Gemalto SA, 92190 Meudon (FR)
(72) Inventor: Pottier, Alexis, 13720 La Bouilladisse (FR); Millard, Jean-Philippe, 13480 Cabries (FR)

(57) **Abstract**

The invention relates to a method (20) for authenticating at least two tokens. A first token (14) is coupled or connected to a first device (12). At least a second token (16) is coupled or connected to the first device.

According to the invention, the method comprises the following steps:
- the first device sends to the first token a request (210) for generating first data;
- the first token or the first device sends to the second token a request (214) for generating second data, the second data being dependent on the first data; and
- the second token sends to the first device the second data (216), the second data allowing to authenticate the first and second tokens.

The invention also relates to a corresponding device.

## Description

### Field of the invention:

The invention relates, in a general manner, to a method for authenticating at least two tokens.

Within the present description, a token, also termed secure element, is an electronic object that is intended to communicate data with the outside world.

Furthermore, the invention pertains to a device for authenticating at least two tokens.

### State of the art:

EP 1 190 399 B1 describes a solution in which a mobile (tele)phone hosts a Subscriber Identity Module (or SIM) type card, as a first token, and an additional card, as a second token. The first token authenticates the second token. The second token stores an applicative program intended to be executed. Thus, once the first token has authenticated the second token, the first token authorizes the applicative program to be executed.

However, such a known solution does not allow a third entity to authenticate two (or more) tokens to be associated with one and the same device, such as a mobile phone.

Thus, there is a need to provide a solution that allows a third entity to authenticate two (or more) tokens to be associated.

### Summary of the invention:

The invention proposes a solution for satisfying the just hereinabove specified need by providing a method for authenticating at least two tokens. A first token is coupled or connected to a first device. At least a second token is coupled or connected to the first device.

According to the invention, the method comprises the following steps. The first device sends to the first token a request for generating first data. The first token or the first device sends to the second token a request for generating second data, the second data being dependent on the first data. And the second token sends to the first device the second data, the second data allowing to authenticate the first and second tokens.

The principle of the invention consists in using a (first) device that initiates an authentication process with at least one of two (or more) tokens to be associated with the device to fetch data issued from the associated tokens. The data issued from the tokens is dependent on data issued from each token of the tokens to be associated. In other words, if one token is not involved for producing partial data for an authentication of the tokens, then the final data issued from the tokens is not able to let authenticate the tokens.

The data issued from the tokens is then to be verified, so as to authenticate effectively the associated tokens.

A first involved token or the device allows linking, on the one hand, output data issued by the first involved token and, on the other hand, input data to be addressed to another token. Thus, a partial result, i.e. data issued by one of the associated tokens, is propagated, from either the token generating the partial result or the device, to another token of the associated tokens, so as to continue the initiated authentication process.

A partial result issued by each of the associated tokens is required for obtaining a final result that depends on all of the issued partial result(s).

It is noteworthy that the device is a necessary third entity, i.e. an entity that is distinct from any of the associated tokens, to authenticate associated tokens, since the device launches a process for authenticating associated tokens and gets data allowing to authenticate the associated tokens.

Thus, the invention solution makes it possible to authenticate, from an external device, associated tokens.

According to a further aspect, the invention is a device for authenticating at least two tokens. A first token is coupled or connected to the device. At least a second token is coupled or connected to the device.

According to the invention, the device is adapted to send to the first token a request for generating first data, send to the second token a request for generating second data, the second data being dependent on the first data, and receive from the second token the second data, the second data allowing to authenticate the first and second tokens.

It is the device that initiates an authentication of the associated tokens and retrieves a result to be verified, so as to know whether the two tokens are the ones which are effectively associated (or not) with the device.

As device, it may be either any terminal, such as a mobile phone, a smart phone (i.e. a mobile phone with a Personal Digital Assistant (or PDA) capability), a set-top box, a tablet computer, a desktop computer, a laptop computer, a video player, an audio player, a portable TeleVision (or TV), a media-player, a game console, a netbook and/or a PDA, or a remote server, as one device, possibly through another device, like a terminal.

### Brief description of the drawings:

Additional features and advantages of the invention will be more clearly understandable after reading a detailed description of one preferred embodiment of the invention, given as one indicative and non-limitative example, in conjunction with the following drawings:

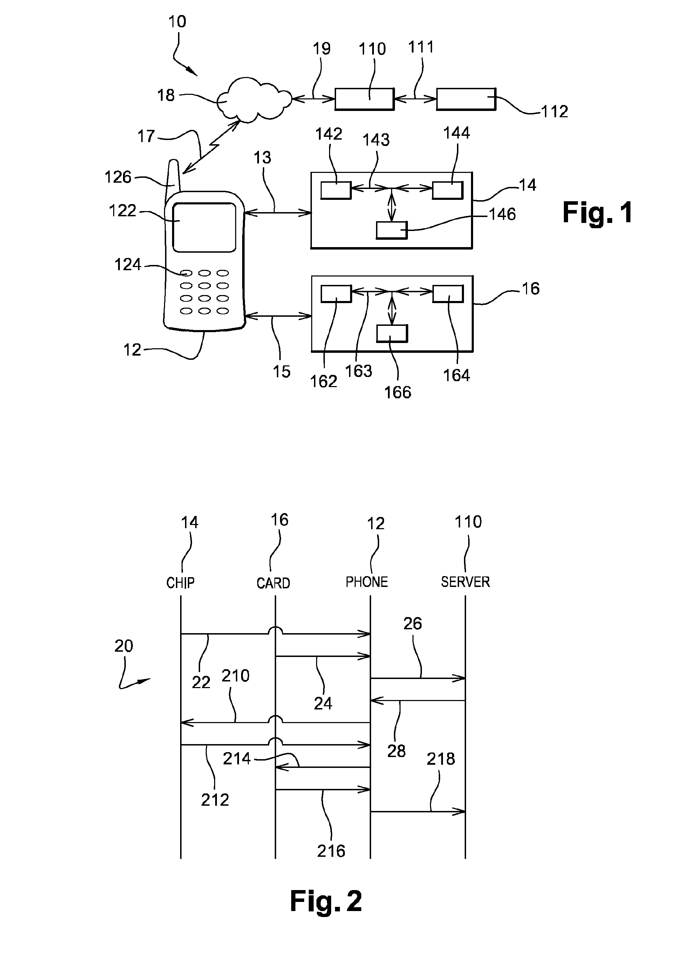

- Figure 1 represents a simplified diagram of one invention embodiment of a system for authenticating two tokens including an integrated chip, as a first token, a smart card, as a second token, a terminal, as a first device, and a remote server, as a second device, connected to the terminal, the system being adapted to authenticate (or not) from the server the two tokens coupled to the terminal; and
- Figure 2 illustrates an example of one message flow notably between the server, the terminal and the tokens of the system of figure 1, so as to request each token to generate data while providing, through the terminal, as an intermediary entity, the token with data originating from either the server or another token.

### Detailed description:

Herein under is considered a case in which the invention method, as a remote token authentication, is implemented by a remote server, through a terminal to which tokens are coupled, to authenticate (remotely) the tokens coupled to the terminal.

However, the invention method may be implemented, as a local token authentication, by a terminal to which tokens are coupled, to authenticate the tokens coupled to the terminal. According to such an implementation, the terminal stores a data generation algorithm(s) and a possible key(s) for generating data to be used for authenticating (locally) the tokens associated with the terminal.

Figure 1 shows one embodiment of an electronic system 10 for authenticating two tokens associated with one and the same terminal 12.

The figure 1 does only present two tokens associated with the terminal 12. However, the invention is also applicable to more than two tokens associated with a single terminal.

The first and second tokens 14 and 16 are either coupled or connected to the terminal 12.

The system 10 comprises a mobile phone 12, as a (user) terminal, an integrated chip 14 soldered to a Printed Circuit Board (or PCB) (not represented) relating to the terminal, as a first token, a SIM type smart card 16, as a second token, and a remote server 110 connected to the terminal.

For a sake of clarity and conciseness, the mobile phone 12, the integrated chip 14, the SIM type smart card 16 and the remote server 110 are termed hereinafter the phone 12, the chip 14, the card 16 and the server 110 respectively.

The phone 12 includes, among others, at least one microprocessor (not represented), at least one memory (not represented) and at least one Input/Output (or I/O) interface.

The microprocessor of the phone 12 is connected, through phone I/O interfaces, to the chip 14, the card 16 and the server 110.

The phone microprocessor processes data originating from the phone memory or an external entity, such as the chip 14, the card 16 or the server 110.

The phone I/O interfaces include I/O an interface, as a contact interface when the card 16 is lodged within the phone 12, so as to exchange data with the chip 14.

The phone I/O interfaces include another I/O interface, so as to exchange data with the card 16. The phone I/O interface with the card 16 may be an International Organization for Standardization (or ISO) 7816 interface, as a contact interface when the card 16 is lodged within the phone 12. According to another embodiment, the phone I/O interface with the card 16 may be a contact-less interface, like an I/O interface relating to a Near Field Communication (or NFC), i.e. an NFC enabled phone communicating, through a short-range radiofrequency link, with the card 16.

The phone 12, as handset, is used, in particular, to benefit from a Man Machine Interface (or MMI) of the phone 12.

The phone I/O interfaces comprise preferably a display screen 122, a keyboard 124 and an antenna 126.

The display screen 122 and the keyboard 124 may be used for exchanging information, as MMI, between a phone user and the phone 12 or another entity(ies), like the chip 14, the card 16 and/or the server 110, to which the phone 12 is coupled or connected.

The antenna 126 is used for exchanging, through a long-range wireless link 17 and a mobile radio-communication network 18, information with the server 110.

The phone memory includes preferably at least one volatile memory and at least one non-volatile memory.

The phone memory stores data, like user data, an Operating System (or OS) and at least one application. As application(s), there is preferably an application that allows, when executed, at a first time, to upload data for identifying both the first and second tokens 14 and 16, and, at a second time, to trigger an authentication process of both and the first and second tokens 14 and 16 while addressing the server 110 and the first and second tokens 14 and 16.

As application(s), there may be, for example, a mobile TV application, so as to offer, preferably through the phone MMI, to the phone user a mobile TV service.

The phone 12 is preferably arranged to connect, through the mobile radio-communication network 18, to the server 110, thanks to data provided by the card 16, for example, an identifier of a subscriber of the mobile radio-communication network 18, like an International Mobile Subscriber Identity (or IMSI), and a Uniform Resource Identifier (or URI) relating to the server 110.

The mobile radio-communication network 18 may be a GSM (acronym for "Global Service for Mobile"), UTRAN (for "Universal Terrestrial Radio Access Network"), UMTS (for "Universal Mobile Telecommunications System"), EDGE (for "Enhanced Data Rates for GSM Evolution"), GPRS (for "General Packet Radio System"), WLAN (for "Wide Local Area Network"), CDMA (for "Code Division Multiple Access") and/or LTE (for "Long Term Evolution") network(s).

Such a mobile radio-communication network list is not exhaustive but only for exemplifying purposes and is not considered to reduce the scope of the present invention.

The mobile radio-communication network 18 may be connected to an Internet network.

In another embodiment, the mobile radio-communication network is a (fixed) communication network, such as Internet or Intranet.

The mobile radio-communication network 18 is connected, preferentially through a bi-directional cable 19, to the server 110.

According to one particular embodiment of the invention, the phone 12 is arranged to send to the chip 14 a request for generating first data, receive from the chip 14 the first generated data, send to the card 16 a request for generating second data along with the first generated data, as input data, and receive from the card 16 the second generated data, as output data.

According to a preferred embodiment of the invention, before sending to the chip 14 the request for generating first data, the phone 12 receives from the server 110, as a remote initiator and controller of an authentication of the two tokens 14 and 16, a request for generating first data possibly accompanied with input data to be used by a first data generation algorithm. And, after receiving from the card 16 the generated second data, the phone 12 forwards to the server 110 the second generated data.

According to such a preferred embodiment, the phone 12 is an intermediate entity between the server 110, as an authentication controller, and the tokens 14 and 16 to be authenticated.

Alternatively, the phone 12, as terminal, plays a role of the controller of an authentication of the tokens 14 and 16 to be authenticated. In other words, the phone 12 does not need to be connected to a server, as controller of an authentication of the tokens 14 and 16 to be authenticated. The phone memory stores a first data generation algorithm to be used by the chip 14, a second data generation algorithm to be used by the card 16 and possibly other data, as input parameter to the first data generation algorithm and a key(s) to be used by the first data generation algorithm and/or the second data generation algorithm and a key(s) to be used by the second data generation algorithm.

The server 110 allows ensuring that the chip 14 is associated with the card 16, as two tokens coupled to the phone 12, as terminal. In other words, the card 16 is to be paired with the chip 14 before accessing a service, such as a mobile TV service. One and the same card 16 is therefore to be used with one and the same chip 14. Otherwise, the access to the service is not possible. A change (or a swap) of the second token 16 by another token is forbidden to offer a thus controlled service to the phone 12 user. Likewise, a change of the first token 14 by another token is forbidden to offer a thus controlled service to the phone 12 user.

The server 110 is preferably arranged to analyse whether the second generated data originating from, for example, the card 16, as a token involved at a second time, does or does not match corresponding expected data.

According to another embodiment, instead of involving the card 16 at a second time, the card 16 generates, at first, first data and, subsequently, the chip 14 generates second data depending on the first data.

To carry out such an analysis, the server 110 determines expected data by using a first data generation algorithm f₁ possibly with input data and a second data generation algorithm f₂ using first data generated by the first data generation algorithm f₁. Expected data corresponds preferentially to a result of input data submitted to two cascaded data generation algorithms, namely a first data generation algorithm f₁ followed by a second data generation algorithm f₂.

The first data generation algorithm f₁ is shared between the server 110 and the chip 14. For example, the first data generation algorithm f₁ is a first data encryption algorithm, such as an algorithm relating to an Advanced Encryption Standard (or AES), a Data Encryption Standard (or DES) or triple DES. As possible further input data to the first data generation algorithm f₁, there may be a first key, denoted k₁. The first key k₁ is shared between the server 110 and the chip 14.

Likewise, the second data generation algorithm f₂ is shared between the server 110 and the card 16. For example, the second data generation algorithm f₂ is a second data encryption algorithm. As possible input data to the second data generation algorithm f₂, there may be a second key, denoted k₂. The second key k₂ is shared between the server 110 and the card 16.

The second data generation algorithm f₂ may be either distinct from the first data generation algorithm or the same as the first data generation algorithm f₁.

Likewise, the second key k₂ may be either distinct from the first key k₁ or the same as the first key k₁.

The server 110 may generate input data prior to the determination of the expected data. The server 110 is arranged to send input data, when generated by the server 110, to the phone 12.

As input data, it may be a random generated by a random generation algorithm.

In a case where the received second generated data matches corresponding expected data, the server 110 may send a result relating to such an authentication process, namely a success result or a non-success result, to the phone 12, the chip 14 and/or the card 16.

When the server 110 has successfully authenticated the two associated tokens 14 and 16, i.e. when the received second generated data corresponds to the determined expected data, the server 110 authorizes the phone 12, the chip 14 and/or the card 16 to access a service by possibly providing it(them), with executable data and/or non-executable data. As executable data, it may be an application(s) downloaded from the server 110 or a server connected to the server 110. As non-executable data, there may be secret data, such as a key(s) that is(are) needed to access information and/or an application(s). The server 110 transmits, preferably in a secure manner, the secret data to the chip 14 and/or the card 16. For example, prior to the transmission of the secret data, the server 110 encrypts the concerned data by using a data encryption key and a data encryption algorithm and an addressee of the secret data decrypts the encrypted data by using a predetermined data decryption key and a predetermined data decryption algorithm, in order to retrieve clear data (i.e. the original data).

The server 110 is hosted by a computer, i.e. equipped with data processing means.

The computer includes, among others, at least one microprocessor (not represented), at least one memory (not represented) and at least one I/O interface (not represented).

The server 110 is dedicated, in particular, to running an application for authenticating tokens associated with their own hosting terminal.

The server 110 manages preferably, through a database, a plurality of user (or subscriber) accounts through their respective paired token identifiers.

The database contains preferably an identifier of the chip 14, such as a serial number of the chip, and a unique identifier of the card 16, such as an IMSI 16, as paired identification data relating to the two tokens 14 and 16.

The database includes, for each user account, besides corresponding paired token identifiers, the first data generation algorithm f₁, the second data generation algorithm f₂, the first key k₁ and/or the second key k₂.

Alternately, the server 110 is connected to another server which manages the database.

The server 110 may communicate, preferably in a secure manner, some information of the database to outside, and in particular, the chip 14 and/or the card 16.

The server 110 may be operated by a mobile radio-communication network operator, on its behalf and/or a service provider. As service provider, it may be a company, like a bank operator, a transport operator that manages a transport service, namely a service for travelling with one or several cars, buses, trains and/or airplanes.

The server 110 is preferably monitored by one single actor, such as a mobile radio-communication network operator or a service provider. The chip 14 and the card 16 are to be authenticated, for the concerned actor, by the server 110, in a linked manner, since each of the associated tokens 14 and 16 is involved to be authenticated.

The server 110 is connected, preferably through a wire link 111, to a memory 112 storing a database, such as a service key(s) for each user (and/or subscriber). The service key(s) constitute(s) rights for accessing concerned service(s) at the phone 12 side. More exactly, thanks to corresponding service key(s) to be used, after its(their) possible local generation, by at least one of the two associated tokens, the server 110 or another server (not represented) connected to the server 110 authorizes the phone 12, as terminal, the chip 14 and/or the card 16 to access the concerned service(s) when the local service key(s) matche(s) the service key(s) registered within the database.

The database may associate each user (and/or subscriber) account with other data relating to the concerned user account, like a current value of the user account.

The database includes preferably at least one key, such as a data encryption key and/or a data decryption key, so that the server 110 exchanges data in a secured manner with the chip 14 and/or the card 16.

As to the chip 14, as first token, it can be any electronic device comprising one microprocessor(s) 142, as means for processing data, one memory(ies) 144, as means for storing data, and one I/O interface(s) 146, as means for receiving data from and/or sending data to outside, which are internally linked together through a data and control bus 143.

The first token 14 is any electronic medium that may have different form factors. The first token 14 may be either fixed within or removable from the phone 12, as host device. For example, the first token 14 is a so-termed Surface Mounted Device (or SMD), a System In Package (or SIP), a SIM type card, a Secure Digital (or SD) type card, a micro-SD type card, a Multi-Media (or MMC) type Card, or a dongle of the USB (acronym for "Universal Serial Bus") type.

According one important feature of a particular embodiment of the invention, the chip 14 is arranged to receive from the phone 12, as host device, a request for generating first data while being possibly supplied with input data originating from the phone 12 to be used for generating the first data, and send to the phone 12 the first generated data.

Alternately, after generating the first data, instead of sending the first generated data to the phone 12, the chip 14 is arranged to send directly (i.e. when connected, through a chip I/O interface, to the card 16) to the card 16 the first generated data.

The chip memory 144 includes preferably at least one volatile memory and at least one non-volatile memory.

The chip 14 preferably stores securely, within its memory 144, a serial number, as a unique identifier associated with the chip 14.

The chip memory 144 also stores data, such as a first data generation algorithm f₁, preferably the first key k₁, an OS and at least one application.

As application(s), there is at least one application algorithm allowing, when executed, to issue first data generated thanks to a use of possible input data originating preferentially from the phone 12, possible other input data, such as the first key k₁, and the first data generation algorithm f₁. The first generated data depends on the possible input data and the predetermined first data generation algorithm f₁ stored within the chip memory 144.

According to another embodiment, instead of originating from the phone 12, some input data originates from the card 16 involved within the authentication process.

The chip microprocessor 142 preferably executes security functions, in order to protect an access to information managed through or by the chip 14. Among others, the security functions allow to identify a user of the chip 14 and/or encrypt data to be sent, in order to be read only by a communication device, such as the server 110. The server 110 shares with the chip 14 a key enabling to decrypt the sent encrypted data (and thus obtain clear data) stored within the chip memory 144.

The security functions include preferably a user authentication process to be used before accessing the chip 14 and/or the server 110. To authenticate the user, the chip 14 may store an application for verifying a Personal Identity Number (or PIN) or biometric data securely stored within the chip memory 144 and to be input by the chip 14 user, so as to compare the input data with the stored PIN or biometric data, so as to authorize a running of the application algorithm.

The security functions include preferentially an encryption/decryption process to be used before sending data to an external communication device, like the server 110, so as to protect an access to the data exchanged between the chip 14 and the server 110.

The chip 14 may be able to initiate actions with possible data provided by the phone 12, such as input data originating from the server 110, in order to interact directly with the outside world. Such a capacity of interaction at the initiative of the chip 14 is also known as proactive capacity.

The chip 14 may be able to send, at its own initiative, to the phone 12 or the card 16, as a request for performing an action:
- a proactive command for launching a phone (Web) browser to access a server 110 that is identified, at least in part, by data, such as a Uniform Resource Information (or URI) or Uniform Resource Locator (or URL), stored within the chip memory 144;
- a proactive command for displaying, through the display screen 122 of the phone 12, a text message, such as "Display text", comprising, at least in part, data stored within the chip memory 144;
- a proactive command for sending to the phone 12, the server 110 or the card 16 that is identified, at least in part, by data stored within the chip memory 144, a message, like a Short Message Service (or SMS) type message ; and/or
- a proactive command for requesting, through the phone 12 MMI, a user input, such as data to be compared with a PIN or biometric data stored within the chip memory 144.

The chip I/O interface 146 includes preferably a contact interface, so as to let communicate, through a contact link 13, the phone 12 and the chip 14.

The chip I/O interface 146 may include a contact-less interface, so as to let communicate, through a short-range radiofrequency link, the phone 12 and the chip 14.

The chip I/O interface 146 interface may include an I/O interface (not represented) allowing to communicate directly (i.e. without using intermediary phone 12 I/O interfaces) with the card 16, as second token.

The second token 16 can be any electronic device comprising one microprocessor(s) 162, as means for processing data, one memory(ies) 164, as means for storing data, and one I/O interface(s) 166, as means for receiving data from and/or sending data to outside, which are internally linked together through a data and control bus 163.

The second token 16 is any electronic medium that may have different form factors. The second token 16 may be either fixed within or removable from the phone 12, as host device.

For example, as device fixed to the host device, the second token 16 is a SMD or a SIP.

For example, as removable device from the host device, instead of a SIM type smart card, the second token 16 can be embodied within a SD type card, a MMC type Card or a dongle of the USB type.

As SIM type smart card, the second token 16 may be, among others, either a card with, as supported application, a SIM for a 2G type network, a Universal SIM (or USIM) for a UMTS type network, a CDMA SIM (or CSIM) for a CDMA type network, a Removable Universal Identity Module (or RUIM) for a CDMA type network, an Internet protocol multimedia Services Identity Module (or ISIM) for a IP-based Multimedia Subsystem (or IMS) or a Universal Integrated Circuit Card (or UICC) for a 3G or LTE type network.

According one important feature of a particular embodiment of the invention, the card 16 is arranged to receive from the phone 12, as host device, a request for generating second data while being supplied with input data originating, through the phone 12, from the chip 14 to be used for generating the second data, and send to the phone 12 the second generated data.

The input data corresponds to the first generated data issued from the chip 14.

The card I/O interface 166 includes preferably an ISO 7816 interface, so as to let communicate, through a contact link 15, the phone 12 and the card 16.

The card I/O interface 166 may include an I/O interface (not represented) allowing to communicate directly (i.e. without using intermediary phone 12 I/O interfaces) with the chip 14.

The card 16 preferably stores securely, within its memory 164, an IMSI relating to the mobile phone user, as a unique number associated with all GSM, UMTS, CDMA and/or LTE type network(s) 18. The IMSI is used to identify a subscriber in relation to one or several mobile radio-communication networks.

The card memory 164 also stores data a second data generation algorithm f₂, preferably one key(s), namely the second key k₂ shared with the server 110 and possibly the chip 14, an OS and at least one application algorithm. Among the key(s), there may be a key Ki allowing to authenticate the card 16 before the mobile radio-communication network 18, a private key enabling to decrypt encrypted data (allowing to obtain clear data) received from an external entity and/or a public key enabling to encrypt data (and to obtain encrypted data) to be sent to an external entity such as the server 110.

The card microprocessor 162 preferably executes security functions, in order to protect an access to information managed through or by the card 16.

The security functions include preferably a user authentication process to be used before accessing the card 16 and/or the server 110. To authenticate the user, the card 16 may store within its memory 164 an application for verifying a PIN or biometric data securely stored and to be input by the card 16 user, so as to compare the input data with the stored PIN or biometric data, so as to authorize the running of the application algorithm.

The security functions include preferentially an encryption/decryption process to be used before sending, to an external communication device, like the server 110, data, and/or after receiving from the external communication device, data, so as to protect an access to the data exchanged between the card 16 and the server 110.

The card 16 may be able to initiate actions with data provided by either the phone 12, such as input data originating from the server 110, or the chip 14. The card 16 is thus able to interact directly with the outside world.

The card 16 may be able to send, at its own initiative, to the phone 12 or the chip 14, as a request for performing an action:
- a proactive command for launching a phone browser to access a server 110 that is identified, at least in part, by data, such as a URI or URL, stored within the card memory 164;
- a proactive command for displaying, through the display screen 122 of the phone 12, a text message, such as "Display text", comprising, at least in part, data stored within the card memory 164;
- a proactive command for sending to the phone 12, the chip 14 or the server 110 that is identified, at least in part, by data stored within the card memory 164, a message, like an SMS type message; and/or
- a proactive command for requesting, through the phone 12 MMI, a user input, such as data to be compared with a PIN or biometric data stored within the card memory 164.

The herein described solution allows having a link between the chip 14 and the card 16, since they have to be both identified and authenticated in a linked manner before being authorized or not to access a service.

Figure 2 presents an example of a message flow 20 that involves the phone 12, the chip 14, the card 16 and the server 110.

Firstly, the chip 14 sends to the phone 12 a first message 22 containing, for example, a serial number of the chip 14 stored within its memory 144. The serial number of the chip 14 is used as an identifier of the chip 14. Such a sending of the first message 22 occurs preferably at a first detection of a presence of the chip 14 carried out by the phone 12. Prior to a sending of the first message 22, the phone 12 may have sent to the chip 14 a request (not represented) for getting an identifier of the chip 14.

Optionally, the first message 22 is sent further to an authentication of the chip 14 user.

Likewise, the card 16 sends to the phone 12 a second message 24 containing, for example, an IMSI stored within the card memory 164. The IMSI is used as an identifier of the card 16. Such a sending of the second message 24 occurs preferably at a second detection of a presence of the card 16 carried out by the phone 12. Prior to a sending of the second message 24, the phone 12 may have sent to the card 16 a request (not represented) for getting an identifier of the card 16.

The sending of the second message 24 may be triggered as soon as the card user has been authenticated, i.e. when the card 16 has successfully verified that an expected PIN or biometric data is entered by the user.

Once the phone 12 has received an identifier of each token with which the phone 12 is in contact, the phone 12 sends to the server 110 a message 26, such as an SMS or an HyperText Transfer Protocol (or HTTP) type request, containing the two identifiers of the chip 14 and the card 16.

For example, the identifier of the chip 14 is placed before the identifier of the card 16. Alternately, the identifier of the card 16 is positioned before the identifier of the chip 14.

Optionally, the phone 12 sends to the server 110 the last message 216 in an encrypted manner by using a public key relating to the server 110.

Then, the server 110 analyses whether a database has or has not registered the chip 14 and the card 16 in a paired manner.

The server 110 controls a process for authenticating, through the phone 12, the chip 14 and the card 16 associated with the phone 12.

If the database does not contain the paired chip 14 and card 16, then the server 110 stores into the database the two identifiers of the chip 14 and the card 16.

If the database does contain an identifier of the chip 14 accompanied with an identifier of a token that is distinct from the one of the card 16, then the server 110 does not allow to authenticate the concerned chip 14 with the other considered token. The chip 14 associated with the not registered token being not authenticated, the chip 14 user is not allowed to access a desired service.

If the database contains the paired chip 14 and card 16, then the server 110 sends to the phone 12 a message 28 for launching an authentication of the paired chip 14 and card 16 comprising a request, such as "GET DATA 1 ", for generating first data denoted DATA 1.

Optionally, the server 110 sends to the phone 12 the last message 28 in an encrypted manner by using a public key relating to the phone 12.

Prior to such a sending of an authentication launching message 28 or within this message, the server 110 may transmit preferably in an encrypted manner, through the phone 12, to the card 16 an application algorithm (i.e. executable data) preferably along with a key to be shared between the card 16 and the server 110. The application algorithm allows authenticating, when executed, the paired chip 14 and card 16.

Likewise, prior to such a sending of an authentication launching message 28 or within this message, the server 110 may transmit preferably in a secured manner, through the phone 12, to the chip 14 an application algorithm preferably along with a key to be shared between the chip 14 and the server 110. The application algorithm allows authenticating, when executed, the paired chip 14 and card 16.

It is assumed that the message 28 for launching an authentication of the paired chip 14 and card 16 includes a request for generating first data along with data, denoted DATA 0, to be used for authenticating the paired chip 14 and card 16, as input data generated by the server 110.

It is also assumed that a key is shared between the server 110 and the registered paired chip 14 and card 16. The shared key ks is, for example, the first key k₁, the second key k₂ and the key Ki that allows authenticating the card 16 before the mobile radio-communication network 18.

According to another embodiment, the first key is distinct from the second key. The first key is shared between the server 110 and the chip 14 while the second key is shared between the server 110 and the card 16.

Once the phone 12 has received the message 28 for launching an authentication of the paired chip 14 and card 16 with input data, the phone 12 transmits to the chip 14 a message 210 including the received request for generating first data DATA 1 accompanied with the received input data DATA 0.

Optionally, the phone 12 transmits to the chip 14 the last message 210 in an encrypted manner by using a public key relating to the chip 14.

Then, the chip 14 uses the first data generation algorithm f₁, possibly the first key k₁ and possibly the received input data DATA 0 to determine corresponding first data DATA 1.

The chip 14 carries out the following calculation: DATA 1 = f₁(DATA 0).

For example, the first data generation algorithm f₁ is an AES, DES or 3DES type algorithm. The chip 14 signs the input data DATA 0 by using the first data generation algorithm f₁ and the first key k₁. As result, the chip 14 generates, as first data DATA 1, signed input data, i.e. input data encrypted with the first key k₁.

Once the first data is generated, the chip 14 sends to the phone 12 a message 212 including the first generated data DATA 1.

Since the interlocutor of the chip 14 and the card 16 is the phone 12, each of the tokens does not have to know whether there exist(s) or not another token(s).

Optionally, the chip 14 sends to the phone 12 the last message 212 in an encrypted manner by using a public key relating to the phone 12.

Then, the phone 12 sends to the card 16 a second request message 214 including a request, such as "GET DATA 2", for generating second data, denoted DATA 2, accompanied with the received first data DATA 1, as parameter.

According to an alternative (not represented), instead of sending indirectly, namely through the phone 12, the first data from the chip 14 to the card 16, the chip 14 sends directly to the card 16 a message including a request, such as "GET DATA 2", for generating second data DATA 2 accompanied with the first generated data DATA 1. Such an alternative allows to remove the two previous stated messages 212 and 214.

Optionally, the phone 12 transmits to the card 16 the last message 214 in an encrypted manner by using a public key relating to the card 16.

Then, the card 16 uses the second data generation algorithm f₂, possibly the second key k₂ and possibly the received first data, as input data, to determine corresponding second data.

The card 16 carries out the following calculation: DATA 2 = f₂(DATA 1).

For example, the second data generation algorithm f₂ is an AES, DES or 3DES type algorithm. The card 16 signs the input data by using the second data generation algorithm f₂ and the second key k₂. As result, the card 16 generates, as second data, signed input data, i.e. first data encrypted with the second key k₂.

Once the second data is generated, the card 16 sends to the phone 12 a message 216 including the second generated data DATA 2.

Optionally, the card 16 sends to the phone 12 the last message 216 in an encrypted manner by using a public key relating to the phone 12.

Then, the phone 12 transmits to the server 110 a message 218 including the second generated data DATA 2 possibly accompanied with the input data DATA 0.

Optionally, the phone 12 sends to the server 110 the last message 218 in an encrypted manner by using a public key relating to the server 110.

For example, the generated second data DATA 2 is the input data originating from the server 110 and that has been twice signed. The chip 14 issues a first signature DATA 1 and the card 16 issues a second signature DATA 2 by taking into account the first signature DATA 1.

As soon as the server 110 has got the second data, the server 110 checks whether the received second data DATA 2 does or does not correspond to expected data.

The server 110 determines the expected data by using the first data generation algorithm f₁, the second data generation algorithm f₂, possibly the first key k₁, possibly the second key k₂, and possibly the input data DATA 0.

For the given example, the server 110 verifies whether the equation that follows is or is not satisfied: DATA 2 = f₂ (f₁(DATA 0)).

If the second data DATA 2 does not correspond to the expected data, then the server 110 does not recognize that the right chip 14 and the right card 16 are paired.

Otherwise, i.e. if the second data DATA 2 does correspond to the expected data, then the server 110 does recognize that the right chip 14 and the right card 16 are paired. In other words, the server 110 does authenticate a pairing of the chip 14 and the card 16.

The server 110 may send to the phone 12, the chip 14 and/or the card 16 an authentication result.

Such a use of the chip 14 and the card 16 may be thus automatic and therefore convenient for the phone user, since the user does not have to be involved (except possibly for being authenticated by the chip 14 and/or the card 16).

The invention solution enhances the security to access data (executable or not) stored by at least one of the authenticated chip 14 and card 16. Once the association of the chip 14 and card 16 has been authenticated, an applicative service(s) supported by, at least in part, one of the associated chip 14 and card 16 may be authorized to be executed.

The applicative service may relate to any kind of service, such as a mobile TV service, an identification service, a tracking service, a transport service, a wallet service, a banking service, a payment service and/or other service(s).

A lot of amendments of the embodiment described supra may be brought without departing from the invention spirit.

For example, instead of beginning by challenging the chip 14 at first, the phone 12 firstly sends to the card 16 a request for generating first data DATA 1 possibly along with input data DATA 0 and then sends to the chip 14 a request for generating second data DATA 2 with the first generated data DATA 1. According to such an alternative, the server 110 determines expected data by carrying out the following calculation f₁(f₂(DATA 0)) and has to check that the following calculation is satisfied: DATA 2 = f₁(f₂(DATA 0)), in order to authenticate the pairing of the chip 14 and the card 16.

According to another embodiment, instead of carrying out the authentication by a remote server, a terminal authenticates locally the pairing of two tokens that are coupled or connected to the terminal. According to such an embodiment, the terminal stores the first and second data generation algorithms f₁ and f₂, possibly a first key k₁, possibly a second key k₂, that are used by the tokens and possibly a data generation algorithm to be used for issuing input data to be submitted to the tokens to be authenticated. The first k₁ and second k₂ keys may constitute one and the same key.

## Claims

1. A method (20) for authenticating at least two tokens, a first token (14) being coupled or connected to a first device (12), at least a second token (16) being coupled or connected to the first device,
**characterized in that** the method comprises the following steps:
- the first device sends to the first token a request (210) for generating first data;
- the first token or the first device sends to the second token a request (214) for generating second data, the second data being dependent on the first data; and
- the second token sends to the first device the second data (216), the second data allowing to authenticate the first and second tokens.

2. Method according to claim 1, wherein the first token sends to the first device the first data (212).

3. Method according to claim 1 or 2, wherein, prior to a sending of the request for generating first data, the method further comprises following steps:
- the first token sends to the first device a first token identifier (22); and
- the second token sends to the first device a second token identifier (24).

4. Method according to any of claims 1 to 3, wherein, the first device being connected to a second device (110), prior to a sending of the request for generating first data, the first device sends to the second device a first token identifier and a second token identifier (26).

5. Method according to claim 4, wherein, prior to a sending of the request for generating first data, the second device sends to the first device third data (28), the first device sends to the first token the third data (210), the third data being taken into account for generating the first data.

6. Method according to claim 5, wherein, the second device and the first and second tokens storing at least one and the same shared key, the first token storing a first data encryption algorithm, as first data generation algorithm, the second token storing a second data encryption algorithm, as second data generation algorithm, the first device sends to the second device the second data (218), the second device verifies whether the second data does or does not correspond expected data, and
- if the second data corresponds to expected data, then the first and second tokens are authenticated.

7. Method according to claim 1 or 2, wherein, the first device and the first and second tokens storing at least one and the same shared key, the first token storing a first data encryption algorithm, as first data generation algorithm, the second token storing a second data encryption algorithm, as second data generation algorithm, the first device verifies whether second data does or does not correspond to expected data; and
- if the second data corresponds to expected data, then the first and second tokens are authenticated.

8. Method according to claim 6, wherein the second device sends to the first token and/or the second token at least one key to be shared between the second device and the first token and/or the second token.

9. Method according to any of the claims 1 to 8, wherein the first device comprises a terminal, the first token comprises an integrated chip soldered to the terminal and/or the second token comprises a Subscriber Identity Module type card.

10. A device (12) for authenticating at least two tokens, a first token (14) being coupled or connected to the device, at least a second token (16) being coupled or connected to the device,
**characterized in that** the device is adapted to:
- send to the first token a request (210) for generating first data;
- send to the second token a request (214) for generating second data, the second data being dependent on the first data; and
- receive from the second token the second data (216), the second data allowing to authenticate the first and second tokens.
